# EUROPEAN PATENT APPLICATION

(11) **EP 4 576 246 A2**
(43) Date of publication of application: **25.06.2025**
(21) Application number: 24221253.8
(22) Date of filing: 18.12.2024
(51) Int. Cl.: H01M 4/133, H01M 4/60, H01M 10/0525, H01M 10/0567, H01M 10/0568, H01M 10/0569

(54) **SECONDARY BATTERY AND ELECTRIC DEVICE INCLUDING SUCH SECONDARY BATTERY**

(30) Priority: 19.12.2023 CN 202311747213
(71) Applicant: Ningde Amperex Technology Limited, Zhangwan Town, Jiaocheng District, Fujian Province Ningde City Fujian 352100 (CN)
(72) Inventor: ZHANG, Huili, Ningde City, Fujian Province 352100 (CN)
(74) Representative: Icosa

(57) **Abstract**

An electrolyte solution includes an organic solvent, and the organic solvent includes ethyl propionate and propyl propionate. Based on a mass of the electrolyte solution, a mass percentage of the ethyl propionate is m%, and a mass percentage of the propyl propionate is n%, a difference n-m between n and m being 5 to 54. The negative electrode active material includes graphite, a ratio n/Lc of n to a crystal size value Lc of the graphite being 1 to 2.14. The amount difference between the ethyl propionate and the propyl propionate in the electrolyte solution is set to satisfy specific requirements, and the ratio n/Lc of the mass percentage n% of the propyl propionate to the crystal size value Lc of the graphite is 1 to 2.14, reducing the high-temperature internal resistance of the secondary battery, and improving the high-voltage cycling performance.

## Description

### TECHNICAL FIELD

This application relates to the field of battery technologies, particularly to a secondary battery and an electric device including such secondary battery.

### BACKGROUND

Secondary batteries such as lithium-ion batteries have advantages such as environmental friendliness, high energy density, and long cycle life, and are widely used in mobile phones, computers, wearable devices, consumer drones, power tools, electric motorcycles, electric vehicles, or large energy storage apparatus. With the continuous expansion of the market, the performance requirements for batteries have been continuously increasing, such as the requirements for battery performance under high- and low-temperature conditions. In the electrolyte solution of the existing secondary battery, a carbonate compound is typically used as a solvent system, but this type of secondary battery has poor high-voltage stability and is likely to cause an unstable structure of the graphite material of the negative electrode, reducing its performance. Therefore, the performance of the secondary battery needs further improvement.

### SUMMARY

In view of this, a first aspect of this application provides a secondary battery, including a positive electrode, a negative electrode, and an electrolyte solution. The electrolyte solution includes an organic solvent, the organic solvent includes ethyl propionate and propyl propionate, and based on a mass of the electrolyte solution, a mass percentage of the ethyl propionate is m%, and a mass percentage of the propyl propionate is n%, a difference n-m between n and m being 5 to 54; and

The negative electrode includes a negative electrode current collector and a negative electrode active substance layer disposed on at least one surface of the negative electrode current collector, the negative electrode active substance layer includes a negative electrode active material, and the negative electrode active material includes graphite, based on a mass of the negative electrode active material, a mass percentage of the graphite is not less than 90%, a ratio n/Lc of n to a crystal size value Lc of the graphite being 1 to 2.14.

According to the secondary battery of this application, the amount difference between the ethyl propionate and the propyl propionate in the electrolyte solution is set to satisfy the foregoing specific requirements. A high amount of propyl propionate can exhibit its low impedance characteristics at low temperatures, and increase the transmission rate of active ions. At high temperatures and high voltages, the ethyl propionate and the propyl propionate can reduce the oxidative corrosion of the graphite surface, reduce the consumption of the active lithium, the internal resistance of the secondary battery, and the high-temperature internal resistance, and improve the high-voltage cycling performance. The ratio n/Lc of the mass percentage n% of the propyl propionate to the crystal size value Lc of the graphite is 1 to 2.14, allowing for a short intercalation and disintercalation path of the lithium ions, and improving the low-temperature rate performance of the secondary battery.

In some embodiments, n-m is 18 to 54. This can further improve the high-voltage cycling performance of the secondary battery and reduce the high-temperature internal resistance. In some embodiments, n-m is 21 to 47.

In some embodiments, a sum m+n of n and m is 42 to 70. Controlling the total mass percentage of the ethyl propionate and the propyl propionate in the electrolyte solution within the above range can further reduce the internal impedance of the secondary battery and the oxidative corrosion of the graphite surface, and further improve the high-voltage cycling performance and the low-temperature rate performance of the secondary battery. In some embodiments, m+n is 53 to 69. In some embodiments, m+n is 52 to 67.5.

In some embodiments, m is 8 to 24. This can better balance the viscosity of the electrolyte solution and the effect of reducing the internal impedance of the secondary battery, further improving the high-voltage cycling performance and the low-temperature rate performance of the secondary battery. In some embodiments, m is 8 to 19. In some embodiments, m is 11 to 21.

In some embodiments, n is 29 to 62. This can better balance the viscosity of the electrolyte solution and the effect of reducing the internal impedance of the secondary battery, further improving the high-voltage cycling performance and the low-temperature rate performance of the secondary battery. In some embodiments, n is 33 to 58. In some embodiments, n is 30 to 53.5.

In some embodiments, the electrolyte solution further includes lithium bis(fluorosulfonyl)imide, and based on the mass of the electrolyte solution, a mass percentage of the lithium bis(fluorosulfonyl)imide is p%, p being 0.07 to 4.3. The lithium bis(fluorosulfonyl)imide has high stability at high temperatures and high voltages, inhibiting decomposition of the propyl propionate, and can form on the graphite surface a stable protective film that has a low impedance and is not easily oxidized, further reducing the internal impedance of the secondary battery and improving the high-temperature performance of the secondary battery. In some embodiments, p is 0.7 to 2.4. In some embodiments, p is 1.3 to 3.5.

In some embodiments, a ratio p/m of p to m is 0.01 to 0.36. Controlling the ratio p/m within the above range can increase the transmission rate of active ions and improve the oxidation resistance of the graphite surface, further enhancing the high-temperature and high-voltage performance of the secondary battery. In some embodiments, p/m is 0.07 to 0.17. In some embodiments, p/m is 0.09 to 0.32.

In some embodiments, the crystal size value Lc of the graphite satisfies: 25≤Lc≤38. Setting the crystal size value Lc of the graphite allows for a short intercalation and disintercalation path of lithium ions in the graphite, improving the low-temperature rate performance of the secondary battery. The crystal size value Lc of the graphite material can be achieved during the preparation of the graphite by controlling the particle size of the raw material, the graphitization treatment temperature, and other methods. In some embodiments, the graphite includes at least one of artificial graphite or natural graphite.

In some embodiments, the electrolyte solution further includes lithium difluorophosphate, and based on the mass of the electrolyte solution, a mass percentage of the lithium difluorophosphate is 0.02% to 2.4%. Adding the lithium difluorophosphate to the electrolyte solution can improve the film-forming stability of the ethyl propionate on the graphite surface at low temperatures, further enhancing the low-temperature rate performance of the secondary battery on a basis of improving the high-temperature and high-voltage performance. In some embodiments, the mass percentage of the lithium difluorophosphate is 0.2% to 1.6%.

In some embodiments, the electrolyte solution further includes 1,3-propane sultone, and based on the mass of the electrolyte solution, a mass percentage of the 1,3-propane sultone is 1.7% to 4.4%. Adding the 1,3-propane sultone to the electrolyte solution can inhibit the excessive film formation of the ethyl propionate on the graphite surface, further reducing the internal impedance of the secondary battery and improving the high- and low-temperature performance of the secondary battery. In some embodiments, the mass percentage of the 1,3-propane sultone is 1.7% to 2.9%. In some embodiments, the mass percentage of the 1,3-propane sultone is 3.1% to 3.9%.

A second aspect of this application provides an electric device, including the foregoing secondary battery. The above secondary battery is used as a power source for an electric device, where the secondary battery has stable performance and can stably supply power to the electric device.

Compared with the prior art, this application has the following beneficial effects:
This application provides a secondary battery, including a positive electrode, a negative electrode, and an electrolyte solution. The electrolyte solution includes an organic solvent, the organic solvent includes ethyl propionate and propyl propionate, and based on a mass of the electrolyte solution, a mass percentage of the ethyl propionate is m%, and a mass percentage of the propyl propionate is n%, n-m being 5 to 54. In the negative electrode, the negative electrode active material includes graphite, based on the mass of the negative electrode active material, the mass percentage of the graphite is not less than 90%, a ratio n/Lc of n to a crystal size value Lc of the graphite being 1 to 2.14. Setting the amount difference of the ethyl propionate and the propyl propionate in the electrolyte solution to satisfy the foregoing specific requirements can reduce the oxidative corrosion of the graphite surface, the consumption of the active lithium, the internal resistance of the secondary battery, and the high-temperature internal resistance, and improve the high-voltage cycling performance. This also allows for a short intercalation and disintercalation path of the lithium ions, and improves the low-temperature rate performance of the secondary battery.

### DETAILED DESCRIPTION

The following describes some embodiments of this application. The data range values recorded in this application should include end values unless otherwise specified.

According to a first aspect of this application, this application provides a secondary battery, including a negative electrode, a positive electrode, an electrolyte solution, and a separator disposed between the positive electrode and the negative electrode. The secondary battery may be a lithium-ion battery or any other suitable secondary battery.

The electrolyte solution includes an organic solvent and an electrolyte. The negative electrode includes a negative electrode current collector and a negative electrode active substance layer disposed on at least one surface of the negative electrode current collector. The positive electrode includes a positive electrode current collector and a positive electrode active substance layer disposed on at least one surface of the positive electrode current collector.

This application mainly focuses on the specific improvement and limitation of the formulation amount of the electrolyte solution and the negative electrode active material (graphite) of the negative electrode to obtain a secondary battery with stable performance.

In this application, the organic solvent of the electrolyte solution includes ethyl propionate and propyl propionate. In the electrolyte solution, the mass percentage of the propyl propionate is greater than the mass percentage of the ethyl propionate. In this application, based on a mass of the electrolyte solution, a mass percentage of the ethyl propionate is m%, and a mass percentage of the propyl propionate is n%, a difference n-m between n and m being 5 to 54, that is, 5≤n-m≤54. Preferably, the difference n-m between n and m is 18 to 54; more preferably, n-m is 21 to 47. As an example, the difference n-m between n and m may be 5, 11, 13, 17, 19, 23, 31, 34, 39, 47, 49, 54, or any value in the range defined by any two of these values.

The negative electrode active substance layer mainly includes a negative electrode active material. In this application, the negative electrode active material mainly includes graphite, and based on a mass of the negative electrode active material, a mass percentage of the graphite is not less than 90%. In some embodiments, the negative electrode active material is made of graphite. In some other embodiments, the negative electrode active material is made of a mixture of graphite and silicon.

The crystal size value Lc of the graphite is the crystal size of the graphite crystal material along the vertical axis measured by X-ray diffraction, in units of nm. In this application, the ratio n/Lc of the value n of the mass percentage n% of the propyl propionate in the electrolyte solution to the crystal size value Lc of the graphite is 1 to 2.14, that is, 1≤n/Lc≤2.14. Preferably, n/Lc is 1.10 to 2.00. For example, n/Lc may be 1, 1.1, 1.2, 1.3, 1.4, 1.5, 1.7, 1.9, 2.0, 2.1, 2.14, or any value in the range defined by any two of these values.

In the secondary battery, the amount difference between the ethyl propionate and the propyl propionate in the electrolyte solution is set to satisfy the foregoing specific requirements. A high amount of propyl propionate can exhibit its low impedance characteristics at low temperatures, and increase the transmission rate of active ions. At high temperatures and high voltages, the ethyl propionate and the propyl propionate can reduce the oxidative corrosion of the graphite surface, reduce the consumption of the active lithium, the internal resistance of the secondary battery, and the high-temperature internal resistance, and improve the high-voltage cycling performance. The ratio n/Lc of the mass percentage n% of the propyl propionate to the crystal size value Lc of the graphite is 1 to 2.14, allowing for a short intercalation and disintercalation path of the lithium ions, and improving the low-temperature rate performance of the secondary battery.

In some embodiments, the crystal size value Lc of the graphite is 25 to 38, that is, 25≤Lc≤38. For example, Lc may be 25, 26, 27, 28, 29, 30, 31, 32, 33, 34, 35, 36, 37, 38, or any value in the range defined by any two of these values. Setting the crystal size value Lc of the graphite allows for a short intercalation and disintercalation path of lithium ions in the graphite, improving the low-temperature rate performance of the secondary battery. The crystal size value Lc of the graphite material can be achieved during the preparation of the graphite by controlling the particle size of the raw material, the graphitization treatment temperature, and other methods.

In some embodiments, the sum n+m of n and m is 42 to 70, that is, 42≤m+n≤70, meaning that based on the mass of the electrolyte solution, the total mass percentage of the ethyl propionate and the propyl propionate is greater than or equal to 42% and less than or equal to 70%. Preferably, m+n is 42 to 70; more preferably, m+n is 53 to 69; and even more preferably, m+n is 52 to 67.5. For example, the sum m+n of n and m may be 42, 47, 51, 53, 57, 63, 64, 67, 69, 70, or any value in the range defined by any two of these values. The total mass percentage of the ethyl propionate and the propyl propionate in the electrolyte solution being within the above range can further reduce the internal impedance of the secondary battery and the oxidative corrosion of the graphite surface, and further improve the high-voltage cycling performance and the low-temperature rate performance of the secondary battery.

In some embodiments, m is 8 to 24, that is, 8≤m≤24, meaning that based on the mass of the electrolyte solution, the mass percentage of the ethyl propionate is greater than or equal to 8% and less than or equal to 24%. Preferably, m is 8 to 24; more preferably, m is 8 to 19; and even more preferably, m is 11 to 21. For example, m may be 8, 11, 13, 14, 16, 17, 19, 20, 21, 23, 24, or any value in the range defined by any two of these values. When the mass percentage of the ethyl propionate satisfies the above range, the viscosity of the electrolyte solution and the effect of reducing the internal impedance of the secondary battery can be better balanced, further improving the high-voltage cycling performance and the low-temperature rate performance of the secondary battery.

In some embodiments, n is 29 to 62, that is, 29≤n≤62, meaning that based on the mass of the electrolyte solution, the mass percentage of the propyl propionate is greater than or equal to 29% and less than or equal to 62%. Preferably, n is 29 to 62; more preferably, n is 33 to 58; and even more preferably, n is 30 to 53.5. For example, n may be 29, 31, 33, 37, 43, 47, 51, 53, 58, 61, 62, or any value in the range defined by any two of these values. When the mass percentage of the propyl propionate satisfies the above range, the viscosity of the electrolyte solution and the effect of reducing the internal impedance of the secondary battery can be better balanced, further improving the high-voltage cycling performance and the low-temperature rate performance of the secondary battery.

In some embodiments, the electrolyte solution further includes lithium bis(fluorosulfonyl)imide (Li(N(SO₂F)₂, LiFSI). Based on the mass of the electrolyte solution, the mass percentage of LiFSI is p%, where p is 0.07 to 4.3, that is, 0.07≤p≤4.3. Preferably, p is 0.7 to 2.4; more preferably, p is 1.3 to 3.5. LiFSI, with high stability at high temperatures and high voltages, suppresses the decomposition of the propyl propionate under high voltage, and can form on the graphite surface a stable protective film that has a low impedance and is not easily oxidized. Adding LiFSI within the above mass percentage range to the electrolyte solution can further reduce the internal impedance of the secondary battery and further improve the high-temperature performance of the secondary battery. For example, p may be 0.07, 0.1, 0.3, 0.7, 1.3, 1.7, 2.3, 2.7, 3.1, 3.3, 3.7, 4.1, 4.3, or any value in the range defined by any two of these values.

In some embodiments, the ratio p/m of p to m is 0.01 to 0.36, that is, 0.01≤p/m≤0.36. Preferably, p/m is 0.07 to 0.17; more preferably, p/m is 0.09 to 0.32. For example, p/m may be 0.01, 0.07, 0.09, 0.13, 0.19, 0.23, 0.27, 0.31, 0.33, 0.35, 0.36, or any value in the range defined by any two of these values. Controlling the ratio p/m of the mass percentage p% of LiFSI to the mass percentage m% of the ethyl propionate within the above range can increase the transmission rate of active ions and improve the oxidation resistance of the graphite surface, further enhancing the high-temperature and high-voltage performance of the secondary battery.

In some embodiments, the electrolyte solution further includes lithium difluorophosphate. Based on the mass of the electrolyte solution, the mass percentage of the lithium difluorophosphate is 0.02% to 2.4%. Preferably, the mass percentage of the lithium difluorophosphate is 0.2% to 1.6%. For example, the mass percentage of the lithium difluorophosphate may be 0.02%, 0.2%, 0.7%, 0.9%, 1.1%, 1.7%, 1.9%, 2.1%, 2.4%, or any value in the range defined by any two of these values. Adding the lithium difluorophosphate can improve the film-forming stability of LiFSI and the ethyl propionate on the graphite surface at low temperatures, further improving the low-temperature rate performance of the secondary battery on a basis of improving the high-temperature and high-voltage performance.

In some embodiments, the electrolyte solution further includes 1,3-propane sultone. Based on the mass of the electrolyte solution, the mass percentage of the 1,3-propane sultone is 1.7% to 4.4%. Preferably, the mass percentage of the 1,3-propane sultone is 1.7% to 2.9%; more preferably, the mass percentage of 1,3-propane sultone is 3.1% to 3.9%. For example, the mass percentage of 1,3-propane sultone may be 1.7%, 1.9%, 2.1%, 2.3%, 2.7%, 2.9%, 3.1%, 3.3%, 3.7%, 3.9%, 4.4%, or any value in the range defined by any two of these values. Adding the 1,3-propane sultone can inhibit the excessive film formation of the ethyl propionate and LiFSI on the graphite surface, further reducing the internal impedance of the secondary battery and improving the high- and low-temperature performance of the secondary battery.

### Electrolyte solution

In addition to the above ethyl propionate and propyl propionate, the organic solvent in the electrolyte solution further includes some other organic solvents, and the other organic solvents may be but are not limited to: ethylene carbonate (EC), propylene carbonate (PC), diethyl carbonate (DEC), ethyl methyl carbonate (EMC), dimethyl carbonate (DMC), or propylene carbonate ester. In some embodiments, the other organic solvent includes an ether solvent, for example, at least one of 1,3-dioxolane (DOL) or dimethoxyethane (DME).

In some embodiments of this application, the electrolyte solution includes lithium salt as an electrolyte. The lithium salt in the electrolyte solution includes but is not limited to: inorganic lithium salt, such as LiClO₄, LiAsF₆, LiPF₆, LiBF₄, LiSbF₆, LiSO₃F, and LiN(FSO₂)₂; fluorine-containing organic lithium salt, such as LiCF₃SO₃, LiN(FSO₂)(CF₃SO₂), LiN(CF₃SO₂)₂, LiN(C₂F₅SO₂)₂, cyclic 1,3-hexafluoropropane disulfonimide lithium, cyclic 1,2-tetrafluoroethane disulfonimide lithium, LiPF₄(CF₃)₂, LiN(CF₃SO₂)(C₄F₉SO₂), LiC(CF₃SO₂)₃, LiPF₄(CF₃SO₂)₂, LiPF₄(C₂F₅)₂, LiPF₄(C₂F₅SO₂)₂, LiBF₂(CF₃)₂, LiBF₂(C₂F₅)₂, LiBF₂(CF₃SO₂)₂, and LiBF₂(C₂F₅SO₂)₂; or lithium salt containing dicarboxylate complexes, such as lithium bis(oxalato)borate, lithium difluoro(oxalato)borate, lithium tris(oxalato)phosphate, lithium difluoro(bis(oxalato))phosphate, and lithium tetrafluoro(oxalato)phosphate. In addition, one of the foregoing lithium salts may be used alone, or two or more thereof may be used. For example, in some embodiments, the lithium salt includes a combination of LiPF₆ and LiBF₄. In some embodiments, the lithium salt includes LiPF₆. In some embodiments, based on the mass of the electrolyte solution, the mass percentage of the lithium salt in the electrolyte solution is 10% to 20%.

The electrolyte solution further includes some other additives. The additives that can be used in the electrolyte solution of some embodiments of this application may be those known in the art that can be used to improve the electrochemical performance of the battery. In some embodiments, the additive includes but is not limited to, at least one of polynitrile compounds, sulfur-containing additives, fluorinated ethylene carbonate (FEC), or 1,4-butane sultone.

The preparation method of the electrolyte solution in some embodiments of this application is not limited and the electrolyte solution may be prepared based on the conventional electrolyte solution. In some embodiments, the electrolyte solution of this application may be prepared by mixing all constituents.

### Negative electrode

In some embodiments, the graphite includes at least one of artificial graphite or natural graphite.

The negative electrode active material particles may be obtained by the following method: selecting some petroleum coke with a low fugitive constituent as the raw material, crushing it into single particles, converting it into graphite through heat treatment, and then performing surface modification treatment to finally obtain negative electrode active particles. Certainly, the preparation method of the negative electrode active particles is not limited to this and may also be prepared using other methods known in the art.

In some embodiments, the negative electrode active substance layer may further include an adhesive. The adhesive may include various adhesive polymers, such as polyvinyl alcohol, carboxymethyl cellulose, hydroxypropyl cellulose, diacetyl cellulose, polyvinyl chloride, carboxylated polyvinyl chloride, polyvinyl fluoride, polymer containing ethylene oxide, polyvinylpyrrolidone, polyurethane, polytetrafluoroethylene, polyvinylidene fluoride, polyethylene, polypropylene, styrene-butadiene rubber, acrylic (ester) modified styrene-butadiene rubber, epoxy resin, and nylon.

In some embodiments, the negative electrode active substance layer also includes a conductive agent to improve the electrode conductivity. Any conductive material causing no chemical change can be used as the conductive material. Examples of the conductive agent include but are not limited to: carbon-based material, such as carbon black, acetylene black, Ketjen black, or carbon fibers; metal-based material, such as metal powder or metal fibers, for example, including copper, nickel, aluminum, or silver; conductive polymer, such as polyphenylene derivative; or their mixtures.

In some embodiments, the negative electrode current collector includes but is not limited to copper foil, nickel foil, stainless steel foil, titanium foil, foamed nickel, foamed copper, a polymer substrate coated with conductive metal, and any combination thereof. In some embodiments, the negative electrode current collector is a copper foil.

In some embodiments, the structure of the negative electrode is a negative electrode structure known in the art that can be used for electrochemical apparatuses.

In some embodiments, the negative electrode preparation method is a negative electrode preparation method known in the art that can be used for electrochemical apparatuses. For example, the negative electrode may be obtained by the following method: mixing the active material, the conductive agent, the adhesive, and the above negative electrode additive in a solvent, and adding a thickener as needed to prepare a negative electrode active material slurry, and applying the negative electrode active material slurry to the current collector, followed by drying and cold calendering to form a negative electrode active substance layer. In some embodiments, the solvent may include but is not limited to water and N-methylpyrrolidone.

### Positive electrode

The positive electrode includes a positive electrode current collector and a positive electrode active substance layer disposed on at least one surface of the positive electrode current collector. The specific types of the positive electrode active material are not subject to specific restrictions, and can be selected according to requirements.

In some embodiments, the positive electrode active material includes lithium transition metal composite oxides. In some embodiments, the positive electrode active material is selected from at least one of the following: lithium cobalt oxide (LiCoO₂), lithium nickel manganese cobalt ternary material (NCM), lithium manganese oxide (LiMn₂O₄), lithium nickel manganese oxide (LiNi_{0.5}Mn_{1.5}O₄), or lithium iron phosphate (LiFePO₄).

In some embodiments, the positive electrode active substance layer further includes an adhesive, and optionally includes a conductive material. The adhesive can enhance bonding between particles of the positive electrode active material, and bonding between the positive electrode active material and a positive electrode current collector. In some embodiments, the adhesive includes but is not limited to polyvinyl alcohol, hydroxypropyl cellulose, diacetyl cellulose, polyvinyl chloride, carboxylated polyvinyl chloride, polyvinyl fluoride, polymer containing ethylene oxide, polyvinylpyrrolidone, polyurethane, polytetrafluoroethylene, poly(1-difluoroethylene), polyethylene, polypropylene, styrene-butadiene rubber, acrylic styrene-butadiene rubber, epoxy resin, and nylon.

In some embodiments, the positive electrode active substance layer also includes a conductive material to impart conductivity to the electrode. The conductive material may include any conductive material as long as such conductive material causes no chemical change. Non-limiting examples of the conductive material include a carbon-based material (for example, carbon black, acetylene black, Ketjen black, carbon fiber), a metal-based material (for example, metal powder and metal fiber, including copper, nickel, aluminum, silver, and the like), a conductive polymer (for example, a polyphenylene derivative), and a mixture thereof.

In some embodiments, the positive electrode current collector is metal, such as but not limited to aluminum foil.

In some embodiments, the structure of the positive electrode is a positive electrode structure known in the art that can be used for secondary batteries.

In some embodiments, the positive electrode preparation method is a positive electrode preparation method known in the art that can be used for secondary batteries. For example, the positive electrode may be obtained by the following method: mixing the active material, the conductive material, the adhesive, and the above positive electrode additive in a solvent, to prepare a positive electrode active material slurry, and applying the positive electrode active material slurry to the current collector, followed by drying and cold calendering to form a positive electrode active substance layer. In some embodiments, the solvent may include, but is not limited to water and N-methylpyrrolidone.

### Separator

In some embodiments, a separator is provided between the positive electrode and the negative electrode to prevent short circuit. The separator is not limited to a particular material or shape, and may be based on any technology disclosed in the prior art. In some embodiments, the separator includes a polymer, an inorganic substance, or the like formed by a material stable to the electrolyte solution of this application.

For example, in some embodiments, the separator includes a substrate layer. The substrate layer is a non-woven fabric, film, or composite film having a porous structure. The material of the substrate layer may be selected from at least one of polyethylene, polypropylene, polyethylene terephthalate, or polyimide. Specifically, the material of the substrate layer may be selected from polypropylene porous film, polyethylene porous film, polypropylene non-woven fabric, polyethylene non-woven fabric, or polypropylene-polyethylene-polypropylene porous composite film.

At least one surface of the substrate layer is provided with a surface treatment layer. The surface treatment layer may be a polymer layer, an inorganic layer, or a layer formed by a mixture of polymer and inorganic substances. Specifically, the inorganic layer includes inorganic particles and a binder. The inorganic particles may be selected from one or a combination of some of alumina, silica, magnesia, titania, hafnia, stannic oxide, ceria, nickel oxide, zinc oxide, calcium oxide, zirconia, yttria, silicon carbide, boehmite, aluminum hydroxide, magnesium hydroxide, calcium hydroxide, or barium sulfate. The binder may be selected from one or a combination of some of polyvinylidene fluoride, vinylidene fluoride-hexafluoropropylene polymer, polyamide, polyacrylonitrile, polyacrylate, polyacrylic acid, polyacrylate salt, polyvinylpyrrolidone, polyethylene ether, polymethyl methacrylate, polytetrafluoroethylene, and polyhexafluoropropylene.

According to a second aspect of this application, this application provides an electric device, including the foregoing secondary battery.

The use of the secondary battery of this application is not particularly limited and can be used in any electric device known in the prior art. For example, the electric device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a storage card, a portable recorder, a radio, a standby power source, a motor, an automobile, a motorcycle, a power-assisted bicycle, a bicycle, a lighting appliance, a toy, a game console, a clock, an electric tool, a flash lamp, a camera, a large household battery, and a lithium-ion capacitor. Additionally, the secondary battery of this application, apart from being suitable for the foregoing electric apparatus, is also suitable for energy storage power stations, marine transport vehicles, and air transport vehicles. The airborne vehicles include airborne vehicles inside the atmosphere and airborne vehicles outside the atmosphere.

The technical solutions of the embodiments of this application are further described below with reference to specific examples.

### Example 1-1

### I. Preparation of lithium-ion battery

### 1. Preparation of negative electrode

Preparation of a graphite material of the negative electrode active material: Artificial graphite intermediate phase carbon microspheres were crushed, and classified sieving was performed to control the particle size distribution, to obtain primary particles with Dᵥ90 of less than 25 µm and Dᵥ50 of 9 µm. Binder asphalt was added to the primary particles for binding, and classified sieving was performed to control the particle size, to obtain secondary particles with Dᵥ90 of less than 45 µm and Dᵥ50 of 10.7 µm. The primary particles and secondary particles were mixed in a ratio of 3:7, graphitized at 2850°C for 10 h, cooled, and magnetically separated, to obtain a graphite material with Dᵥ50 of 10.2 µm.

The crystal size value Lc of the graphite material in the negative electrode could be controlled based on the particle size of the raw materials and the graphitization treatment temperature.

The prepared graphite particles of the negative electrode active material, a conductive agent carbon black, a binder styrene-butadiene rubber (SBR), and a thickener sodium carboxymethyl cellulose (CMC) were added to a solvent deionized water in a mass ratio of 95.7:1.5:1.8:1 and fully stirred and mixed to form a uniform negative electrode slurry. The negative electrode slurry was evenly applied to a copper foil of the negative electrode current collector, dried, and cold calendered to form a negative electrode active substance layer, followed by cutting and welding to a tab, to obtain a negative electrode.

### 2. Preparation of positive electrode

The positive electrode active material lithium cobalt oxide, a conductive agent acetylene black, and a binder polyvinylidene fluoride (PVDF) were mixed in a mass ratio of 96.3:2.2:1.5 in a solvent N-methylpyrrolidone (NMP), and fully stirred to uniformity in a vacuum stirrer, to obtain a positive electrode slurry. The positive electrode slurry was applied to an aluminum foil of the positive electrode current collector, dried, and cold calendered to form a positive electrode active substance layer, followed by cutting and welding to a tab, to obtain a positive electrode.

### 3. Preparation of electrolyte solution

In a dry argon atmosphere glove box, propyl propionate (PP), ethyl propionate (EP), ethylene carbonate (EC), and propylene carbonate (PC) were mixed to uniformity, dissolved, and fully stirred, with lithium salt LiPF₆ added, and mixed to uniformity, to obtain the electrolyte solution. Based on the mass of the electrolyte solution, a mass percentage of lithium salt LiPF₆ was 12.5%, a mass percentage of EP was 8%, a mass percentage of PP was 62%, and the remainder was ethylene carbonate (EC) and propylene carbonate (PC), with a mass ratio of EC:PC=2:1.

### 4. Preparation of separator

A polyethylene (PE) porous polymer film was used as a separator.

### 5. Preparation of lithium-ion battery

The obtained positive electrode, separator, and negative electrode were stacked in sequence with the separator positioned between the positive electrode and the negative electrode to provide a separating function, and then wound to obtain a bare battery. The bare battery was placed in an outer packaging foil aluminum-plastic film, with an electrolyte solution injected, followed by processes such as vacuum packaging, standing, and formation, to obtain a lithium-ion battery.

The preparation processes of Examples 1-2 to 1-13 were basically the same as that of Example 1-1, with specific differences shown in Table 1. Additionally, the graphitization treatments of Examples 1-11 to 1-13 were basically the same as the graphitization treatment of Example 1-1, but with some differences, as detailed below. The graphitization treatment process of Example 1-11 was completed with conditions: primary particles with Dᵥ50 of 7 µm, secondary particles with Dᵥ50 of 9 µm, and graphitization temperature of 3100°C for 12 h. The graphitization treatment process of Example 1-12 was completed with conditions: primary particles with Dᵥ50 of 9.5 µm, secondary particles with Dᵥ50 of 11.0 µm, and graphitization temperature of 2750°C for 10 h. The graphitization treatment process of Example 1-13 was completed with conditions: primary particles with Dᵥ50 of 10 µm, secondary particles with Dᵥ50 of 11.5 µm, and graphitization temperature of 2600°C for 12 h.

The preparation processes of Comparative examples 1-1 to 1-3 were roughly the same as that of Example 1-1, with specific differences detailed in Table 1.

### II. Test method

1. Parameter test: The method for testing the crystal size of the graphite material using an X-ray diffractometer to measure and analyze the crystal size Lc value of the negative electrode graphite material along the vertical axis.

The crystal size value Lc was calculated based on the Scherrer formula with reference to the X-ray diffraction test results. The Scherrer formula was: Lc = Kλ/β_{(2θ)}cosθ, where K was the Scherrer constant (K=0.9), λ was the wavelength of the incident X-ray, θ was the angle at the maximum peak, and β was the full width at half maximum.

### 2. Performance test of lithium-ion battery

### 2.1. Low-temperature discharge rate performance

The lithium-ion battery was placed in a 25°C constant temperature chamber, left standing for 5 min; discharged at a constant current of 0.5C to a voltage of 2.5 V; left standing for 30 min; charged at a constant current of 0.2C to a voltage of 3.6 V, and then charged at constant voltage to a current of 0.025C; left standing for 10 min; discharged at a constant current of 2.0C to a voltage of 2.5 V (discharge capacity at 25°C); left standing for 10 min; charged at a constant current of 0.2C to a voltage of 3.6 V, and then charged at a constant voltage to 0.025C; left standing for 10 min; and with the temperature adjusted to -10°C, left standing for 60 min; discharged at a constant current of 1.0C to a voltage of 2.5 V; left standing for 30 min; charged at a constant current of 0.2C to a voltage of 3.6 V, and then charged at a constant voltage to a current of 0.025C; left standing for 10 min; discharged at a constant current of 2.0C to a voltage of 2.5 V (discharge capacity at -10°C); and with the temperature adjusted to 25°C, left standing for 60 min.

The discharge rate at -10°C=(discharge capacity at -10°C/discharge capacity at 25°C)×100%, with a discharge rate of 2C.

### 2.2 High-voltage cycling performance

At 45°C, the lithium-ion battery was charged at a constant current of 1C to a voltage of 4.4 V, charged at a constant voltage to a current of 0.05C, and then discharged at a constant current of 1C to a voltage of 3.0 V. This constituted one charge-discharge cycle, with the discharge capacity of this cycle being the discharge capacity of the first cycle. The lithium-ion battery was subjected to 300 cycles of charge/discharge test according to the above method, and the discharge capacity of the lithium-ion battery at the 300th cycle was measured.

High-voltage cycling capacity retention rate (%)=(discharge capacity of the lithium-ion battery after 300 cycles/discharge capacity of the lithium-ion battery in the first cycle)×100%.

### 2.3 High-temperature direct-current impedance test

The lithium-ion battery was placed in a 40°C constant temperature chamber and left standing for 2 h. The lithium-ion battery was charged to a voltage of 4.46 V at a constant current of 0.1C, charged to a current of 0.05C at a constant voltage, and left standing for 10 min, Then, the lithium-ion battery was discharged at a constant current of 0.1C to 3.6 V, left standing for 5 min, charged at a constant current of 0.1C to 4.46 V, charged at a constant voltage to a current of 0.03C, left standing for 10 min, and discharged at a constant current of 0.1C for 2 h, with the voltage V1 at this moment recorded. Next, the lithium-ion battery was discharged at a constant current of 1C for 1s (sampling at 10ms, with the current calculated correspondingly with reference to the rated capacity of the lithium-ion battery), with the voltage V2 at this moment recorded. Then, the direct-current impedance corresponding to the 60% state of charge (SOC) of the lithium-ion battery was calculated.

The high-temperature direct-current impedance calculation formula is 60%SOC DCR=(V2-V1)/1C.

It can be seen from Table 1 that the test results of Examples 1-1 to 1-13 are significantly better than those of Comparative examples 1-1 to 1-3, indicating that the lithium-ion battery exhibits significantly improved low-temperature rate performance and high-temperature high-voltage performance by controlling the mass percentage of the ethyl propionate in the electrolyte solution to be m%, the mass percentage of the propyl propionate to be n%, the difference n-m between n and m to be 5 to 54, and the ratio n/Lc of the crystal size value Lc of the graphite in the negative electrode to n to be 1 to 2.14.

The preparation processes of Examples 2-1 to 2-25 were basically the same as that of Example 1-2, except that at least one of LiFSI, LiPO₂F₂, or 1,3-propane sultone (PS) was selectively added to the electrolyte solution, with specific differences detailed in Tables 2-1 and 2-2.

From Tables 2-1 and 2-2, it can be seen that the test results of Examples 2-1 to 2-25 are significantly better than those of Example 1-2, indicating that further adding one or more of LiFSI, PS, and LiPO₂F₂ to the electrolyte solution can further improve the low-temperature performance and high-temperature high-voltage performance of the lithium-ion battery. When the ratio p/m of p to m is 0.01 to 0.36, the high-temperature high-voltage performance of the secondary battery can be further improved.

**Table 1**

| Item | EP (%) m | PP (%) n | n-m | m+n | Lc | n/Lc | Low-temperature discharge rate | High-voltage cycling capacity retention rate | High-temperature direct-current impedance |
|---|---|---|---|---|---|---|---|---|---|
| Example 1-1 | 8 | 62 | 54 | 70 | 29 | 2.14 | 76.5% | 69.8% | 105 |
| Example 1-2 | 11 | 58 | 47 | 69 | 29 | 2.00 | 81.4% | 77.5% | 98 |
| Example 1-3 | 14 | 53.5 | 39.5 | 67.5 | 29 | 1.84 | 80.9% | 78.4% | 100 |
| Example 1-4 | 17 | 47 | 30 | 64 | 29 | 1.62 | 79.5% | 76.3% | 102 |
| Example 1-5 | 20 | 42.5 | 22.5 | 62.5 | 29 | 1.47 | 78.2% | 75.8% | 103 |
| Example 1-6 | 16 | 37 | 21 | 53 | 29 | 1.28 | 77.1% | 74.3% | 102 |
| Example 1-7 | 12 | 30 | 18 | 42 | 29 | 1.03 | 74.5% | 68.2% | 107 |
| Example 1-8 | 19 | 33 | 14 | 52 | 29 | 1.14 | 75.6% | 72.5% | 105 |
| Example 1-9 | 21 | 32 | 11 | 53 | 29 | 1.10 | 74.2% | 72.2% | 105 |
| Example 1-10 | 24 | 29 | 5 | 53 | 29 | 1.00 | 74.1% | 68.7% | 108 |
| Example 1-11 | 12 | 51 | 39 | 63 | 38 | 1.34 | 77.3% | 74.6% | 106 |
| Example 1-12 | 12 | 51 | 39 | 63 | 27 | 1.89 | 75.2% | 77.9% | 100 |
| Example 1-13 | 12 | 51 | 39 | 63 | 25 | 2.04 | 73.4% | 69.7% | 103 |
| Comparative example 1-1 | 6 | 67 | 61 | 73 | 29 | 2.31 | 65.1% | 61.2% | 121 |
| Comparative example 1-2 | 8 | 24 | 16 | 32 | 29 | 0.83 | 67.0% | 63.2% | 117 |
| Comparative example 1-3 | 13 | 35 | 22 | 48 | 38 | 0.92 | 70.3% | 66.3% | 112 |

**Table 2-1**

| Item | EP (%) m | LiFSI (%) p | p/m | LiPO₂F₂ (%) | PS (%) | Low-temperature discharge rate | High-voltage cycling capacity retention rate |
|---|---|---|---|---|---|---|---|
| Example 1-2 | 11 | 0 | 0 | 0 | 0 | 81.4% | 77.5% |
| Example 2-1 | 11 | 0.07 | 0.01 | 0 | 0 | 81.9% | 78.0% |
| Example 2-2 | 10 | 0.7 | 0.07 | 0 | 0 | 82.2% | 78.4% |
| Example 2-3 | 14 | 1.3 | 0.09 | 0 | 0 | 83.4% | 80.1% |
| Example 2-4 | 12 | 1.6 | 0.13 | 0 | 0 | 83.7% | 81.9% |
| Example 2-5 | 14 | 2.4 | 0.17 | 0 | 0 | 85.0% | 81.4% |
| Example 2-6 | 11 | 3.5 | 0.32 | 0 | 0 | 83.8% | 80.7% |
| Example 2-7 | 12 | 4.3 | 0.36 | 0 | 0 | 82.1% | 77.8% |
| Example 2-8 | 12 | 1.6 | 0.13 | 0.02 | 0 | 83.9% | 82.0% |
| Example 2-9 | 12 | 1.6 | 0.13 | 0.2 | 0 | 84.7% | 82.5% |
| Example 2-10 | 12 | 1.6 | 0.13 | 0.6 | 0 | 85.3% | 82.7% |
| Example 2-11 | 12 | 1.6 | 0.13 | 1.2 | 0 | 84.7% | 83.6% |
| Example 2-12 | 12 | 1.6 | 0.13 | 1.6 | 0 | 84.1% | 83.3% |

**Table 2-2**

| Item | EP (%) m | LiFSI (%) p | p/m | LiPO₂F₂ (%) | PS (%) | Low-temperature discharge rate | High-voltage cycling capacity retention rate |
|---|---|---|---|---|---|---|---|
| Example 2-13 | 12 | 1.6 | 0.13 | 2.4 | 0 | 83.8% | 82.3% |
| Example 2-14 | 12 | 0 | 0 | 0.8 | 0 | 83.3% | 81.5% |
| Example 2-15 | 12 | 0 | 0 | 1.2 | 0 | 84.2% | 83.1% |
| Example 2-16 | 12 | 1.6 | 0.13 | 0 | 1.7 | 84.6% | 83.5% |
| Example 2-17 | 12 | 1.6 | 0.13 | 0 | 2.3 | 87.4% | 86.4% |
| Example 2-20 | 12 | 1.6 | 0.13 | 0 | 2.9 | 87.9% | 86.8% |
| Example 2-18 | 12 | 1.6 | 0.13 | 0 | 3.1 | 87.3% | 85.9% |
| Example 2-21 | 12 | 1.6 | 0.13 | 0 | 3.9 | 86.4% | 84.7% |
| Example 2-19 | 12 | 1.6 | 0.13 | 0 | 4.4 | 84.2% | 82.8% |
| Example 2-22 | 12 | 0 | 0 | 0 | 2.3 | 83.7% | 82.0% |
| Example 2-23 | 12 | 0 | 0 | 0 | 3.1 | 83.6% | 81.8% |
| Example 2-24 | 12 | 1.6 | 0.13 | 0.6 | 3.1 | 89.4% | 87.9% |
| Example 2-25 | 12 | 1.6 | 0.13 | 1.2 | 2.3 | 88.5% | 86.8% |

The foregoing embodiments are merely intended to describe the technical solutions of this application, but not intended to constitute any limitation. Although this application is described in detail with reference to the foregoing preferred embodiments, persons of ordinary skill in the art should understand that modifications or equivalent replacements can be made to the technical solutions of this application, without departing from the spirit and scope of the technical solutions of this application.

## Claims

1. A secondary battery, comprising a positive electrode, a negative electrode, and an electrolyte solution; wherein the electrolyte solution comprises an organic solvent, the organic solvent comprises ethyl propionate and propyl propionate; based on a mass of the electrolyte solution, a mass percentage of the ethyl propionate is m%, and a mass percentage of the propyl propionate is n%, a difference n-m between n and m being 5 to 54; and
the negative electrode comprises a negative electrode current collector and a negative electrode active substance layer disposed on at least one surface of the negative electrode current collector; the negative electrode active substance layer comprises a negative electrode active material, and the negative electrode active material comprises graphite; based on a mass of the negative electrode active material, a mass percentage of the graphite is not less than 90%, wherein a ratio n/Lc of n to a crystal size value Lc of the graphite being 1 to 2.14.

2. The secondary battery according to claim 1, wherein the electrolyte solution satisfies at least one of the following conditions:
(1) n-m is 18 to 54;
(2) m+n is 42 to 70;
(3) m is 8 to 24;
(4) n is 29 to 62; or
(5) n/Lc is 1.10 to 2.00.

3. The secondary battery according to claim 1 or 2, wherein the electrolyte solution satisfies at least one of the following conditions:
(6) n-m is 21 to 47;
(7) m+n is 53 to 69;
(8) m is 8 to 19; or
(9) n is 33 to 58.

4. The secondary battery according to claim 1 or 2, wherein the electrolyte solution satisfies at least one of the following conditions:
(I) m+n is 52 to 67.5;
(II) m is 11 to 21; or
(III) n is 30 to 53.5.

5. The secondary battery according to any one of claims 1 to 4, wherein the electrolyte solution further comprises lithium bis(fluorosulfonyl)imide; and based on the mass of the electrolyte solution, a mass percentage of the lithium bis(fluorosulfonyl)imide is p%, and p being 0.07 to 4.3.

6. The secondary battery according to claim 5, wherein a ratio p/m of p to m is 0.01 to 0.36.

7. The secondary battery according to claim 5 or 6, wherein the electrolyte solution satisfies at least one of the following conditions:
(i) p is 0.7 to 2.4; or
(ii) a ratio p/m of p to m is 0.07 to 0.17.

8. The secondary battery according to claim 5 or 6, wherein the electrolyte solution satisfies at least one of the following conditions:
(iii) p is 1.3 to 3.5; or
(iv) a ratio p/m of p to m is 0.09 to 0.32.

9. The secondary battery according to any one of claims 1 to 8, wherein the value Lc of the graphite is 25 to 38.

10. The secondary battery according to any one of claims 1 to 9, wherein the graphite comprises at least one of artificial graphite or natural graphite.

11. The secondary battery according to any one of claims 1 to 10, wherein the electrolyte solution satisfies at least one of the following conditions:
(a) the electrolyte solution further comprises lithium difluorophosphate; and based on the mass of the electrolyte solution, a mass percentage of the lithium difluorophosphate is 0.02% to 2.4%; or
(b) the electrolyte solution further comprises 1,3-propane sultone; and based on the mass of the electrolyte solution, a mass percentage of the 1,3-propane sultone is 1.7% to 4.4%.

12. The secondary battery according to any one of claims 1 to 11, wherein the electrolyte solution further comprises lithium difluorophosphate; and based on the mass of the electrolyte solution, a mass percentage of the lithium difluorophosphate is 0.2% to 1.6%.

13. The secondary battery according to any one of claims 1 to 12, wherein the electrolyte solution further comprises 1,3-propane sultone; and based on the mass of the electrolyte solution, a mass percentage of the 1,3-propane sultone is 1.7% to 2.9%.

14. The secondary battery according to claim 11, wherein the electrolyte solution comprises the 1,3-propane sultone, and the mass percentage of the 1,3-propane sultone is 3.1% to 3.9%.

15. An electric device, comprising the secondary battery according to any one of claims 1 to 14.
